# EUROPEAN PATENT SPECIFICATION

(11) **EP 4 540 639 B1**
(45) Date of publication and mention of the grant of the patent: **25.11.2026**
(21) Application number: 23732958.6
(22) Date of filing: 16.06.2023
(51) Int. Cl.: G02B 5/02, G02B 5/22, G02C 7/10

(54) **OPTICAL LENS AND METHODS FOR AUGMENTED VISUAL PERCEPTION**
OPTISCHE LINSE UND VERFAHREN ZUR ERWEITERTEN VISUELLEN WAHRNEHMUNG
LENTILLE OPTIQUE ET PROCÉDÉS D'AUGMENTATION DE LA PERCEPTION VISUELLE

(30) Priority: 17.06.2022 EP 22179690
(43) Date of publication of application: 23.04.2025
(73) Proprietor: Université catholique de Louvain, 1348 Louvain-la-Neuve (BE); President And Fellows Of Harvard College, Cambridge, Massachusetts 02138 (US)
(72) Inventor: VANNUSCORPS, Gilles, 1348 Louvain la Neuve (BE)
(74) Representative: Icosa
(86) International application number: PCT/EP2023/066221
(87) International publication number: WO 2023/242395

(56) References cited:
- EP-B1- 0 127 821
- FR-A1- 2 666 991
- US-A1- 2004 064 065
- US-B1- 6 612 697
- RAY N J ET AL: "Yellow Filters Can Improve Magnocellular Function: Motion Sensitivity, Convergence, Accommodation, and Reading", ANNALS OF THE NEW YORK ACADEMY OF SCIENCES, NEW YORK ACADEMY OF SCIENCES, US, vol. 1039, no. 1, 9 January 2006 (2006-01-09), pages 283 - 293, XP071401961, ISSN: 0077-8923, DOI: 10.1196/ANNALS.1325.027

## Description

### FIELD OF INVENTION

The present invention relates to optical lenses and methods for augmented visual perception, and to ophthalmic lenses and spectacles.

### BACKGROUND OF INVENTION

In the human retina, photoreceptor cells are responsible of visual phototransduction, which is the process during which light is absorbed by pigment molecules present in the photoreceptor cells, and then converted to an electrical signal.

There are two types of photoreceptors: rods and cones. Cones are classified in three categories on the basis of their spectral sensitivity lo light: short-wavelength-sensitive cones (or S cones), middle-wavelength-sensitive cones (or M cones), and long-wavelength-sensitive cones (or L cones).

Cones are responsible for photopic and color vision, whereas rods are responsible for scotopic vision.

Information from cones is transmitted to the brain via two main types of neurons - magnocellular and parvocellular neurons - that have complementary characteristics.

In the brain, visual information is processed by brain areas organized in two main different anatomical streams: a ventral stream, which is mainly involved in the perception of color and shape and a dorsal stream, which is mainly involved in the visual perception for visually guided behaviors, the processing of movement and the processing of the spatial characteristics of objects (their location, orientation).

Color sheets to be superposed on a reading surface (e.g., on a paper or on a book) have been proposed as a mean to facilitate reading. Nevertheless, these colored sheets do not provide light filtering properties tailored to favor processing through one visual stream or another of the subject. Moreover, the choice of the sheet is arbitrary, since based on subjective statements or personal preferences of the subjects, and there is no evidence or suggestion of such sheets to be beneficial for reading impairment.

Moreover, these colored sheets can only be used while reading on a fixed reading surface and are not compatible with most everyday life activities.

In this domain, reading glasses also exist. Reading glasses provide a vision correction which compensate for diminished vision due to presbyopia. However, they do not provide either a satisfactory improvement of visual perceptions.

The document FR 2 666 991 A1 discloses glasses with a colour filter combined with diffusing properties.

### SUMMARY

The aim of the present invention is to overcome some or all drawbacks of the prior art and to improve the effectiveness of visual aids to reading, notably for dyslexics and/or individuals who suffer from a deficient magnocellular stream.

It is also an objective of the present invention to develop a visual aid that improves visual processing in the magnocellular stream, and therefore improve dorsal stream visual functions, such as the perception of moving or rapidly changing stimuli.

To this end, the object of the invention is an optical lens and methods for enhanced visual perception of movement.

The invention thus relates to an optical lens for augmented visual perception of a scene. The optical lens has a first side configured to face an eye of a subject, and a second side opposite to the first side. The optical lens comprises:
- a bandpass filter having a center wavelength comprised between 540 nm and 560 nm and having a full width at half maximum equal or inferior to 50 nm; and/or
- a blurring filter configured to attenuate the spatial frequency of the visual stimulus corresponding to the scene which are greater than 10 cyc/deg.

The bandpass filter and/or the blurring filter advantageously lower contrast and high spatial frequencies of the scene observed through said optical lens and inhibit the parvocellular stream of the subject wearing said optical lens.

In an embodiment, the optical lens comprises a bandpass filter and a blurring filter. The combination of both filters improves the inhibition of the parvocellular stream of the subject.

In an embodiment, the center wavelength of the bandpass filter is comprised between 545 nm and 555 nm, preferably equal to 550 nm. This specific range of wavelength is located where the absorbance of human M cones and the absorbance of human L cones are similar, *i.e.,* a range of wavelength that minimizes the contribution of the parvocellular stream to vision and maximizes the contribution of the magnocellular stream to vision.

In an embodiment, the bandpass filter has an overall transmission equal or inferior to 10%, preferably inferior to 4%.

In an embodiment, the blurring filter is configured to attenuate the spatial frequency of the visual stimulus corresponding to the scene which are greater than 8 cyc/deg, preferably greater than 6 cyc/deg, more preferably greater than 4 cyc/deg.

In an embodiment, the bandpass filter is laid onto to the first side of the optical lens and the blurring filter is laid onto to the second side of the optical lens.

In an embodiment, the blurring filter is made of a solid diffusive material, or a solid material having a surface roughness, preferably roughened quartz or polytetrafluoroethylene.

In an embodiment, the optical lens is an ophthalmic lens, preferably a spectacle lens.

The invention relates also to spectacles comprising a frame and a pair of spectacle lenses as disclosed hereabove.

The invention relates also to a method for selection of optical lenses for improving visual perception of a scene by a subject, the method comprising:
a. providing the optical lens or the spectacles disclosed hereabove to the subject, the optical lens or spectacles being interposed at a predetermined distance from the eyes of the subject and from the scene;
b. measuring an optical parameter of the subject,
   wherein said providing and measuring are repeated for at least two optical lenses or spectacles having different filtering features of the bandpass filter and/or different features of the blurring filter; and
c. among the provided optical lenses or spectacles, selecting the optical lens or spectacles corresponding to the best measured optical parameter.

According to the invention, the optical parameter is selected from the list of: reading efficiency - for instance with inverse efficiency index -, visual motion direction perception threshold, visual motion speed perception threshold.

In an embodiment, the scene comprises a linear arrangement of symbols, numbers and/or letters. Indeed, such scenes have been proven very difficult to read/discriminate for individuals suffering from dyslexia. Thus, using such scenes is especially relevant to select to most appropriate lenses or spectacles for a dyslexic individual.

The invention further relates to a method for improving the perception of a moving or transient visual stimulus, the method comprising interposing the optical lens or the spectacles disclosed hereabove between the eye of the subject and the scene.

Last, the invention also relates to a method for treating an impairment of the magnocellular and/or parvocellular visual pathway of a subject, the method comprising interposing the optical lens or the spectacles disclosed hereabove between the eye of the subject and a visual stimulus. This method is especially appropriate when the subject is suffering from dyslexia.

### DEFINITIONS

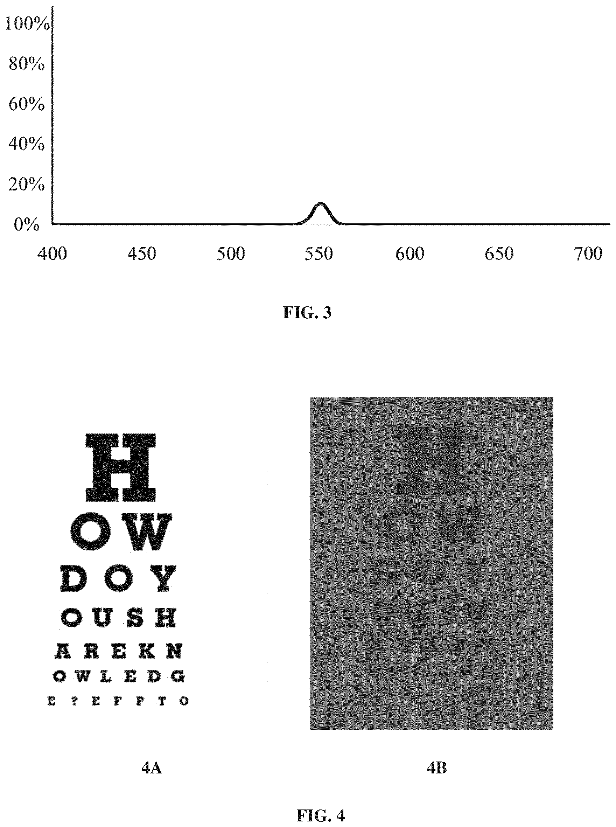

In the present disclosure, the following terms have the following meanings:
- *"About"* is used herein to mean approximately, roughly, around, or in the region of. When the term *"about"* is used in conjunction with a numerical range, it modifies that range by extending the boundaries above and below the numerical values set forth. When the term *"about"* is used preceding a figure means plus or less 10% of the value of said figure.
- By *"alexia",* also called acquired dyslexia, it is meant an acquired reading difficulty, for instance due to brain trauma.
- By *"blurring filter"* it is meant a filter through which the perception of the limits between objects of a scene - in other words, edges or transitions between two parts of the scene providing different visual stimuli - is degraded. Typically, edges of objects are not sharply perceived through a blurring filter, but appear diffuse or fuzzy, while the global shape of the object remains perceptible. This is illustrated in **figure 4****,** image **4B** being blurred.
- By *"cyc*/*deg"* it is meant the unit for spatial frequency: number of repetitions in a pattern within 1 degree of visual angle. For instance, a pattern comprising 50 vertical lines regularly spaced every 1 cm and placed at a distance of 1 m from the eye of a subject is viewed within a visual angle of about 28° and generates a visual stimulus with a spatial frequency of about 50/28=1.8 cyc/deg. The same pattern placed at a distance of 5 m generates a visual stimulus with a spatial frequency of about 8.7 cyc/deg. The spatial frequency is not an intrinsic property of a scene, but a property of the visual stimulus corresponding to the scene.
- By *"diffusion"* of a lens it is meant its property to scatter the light passing therethrough into other direction, *i.e.,* different than the incident direction.
- By *"dyslexia",* it is meant a reading difficulty in a subject of adequate intelligence and in some cases with preserved visual acuity. Some individuals with dyslexia suffer from a deficient magnocellular stream.
- By *"frost filter"* it is meant a blurring filter. Frost filter are often referred to in commercial references such as diffusion filters supplied by LEE Filters (a Panavision Company).
- by *"light stimulus"* it is meant the light that reaches the eye of a subject and that elicits a response in the photoreceptor cells present in the retina (phototransduction).
- By *"refraction"* of a lens it is meant its property to deviate the light passing therethrough into other direction, *i.e.,* different than the incident direction.
- By *"scene"* it is meant a physical object, such as a text, a symbol, or a drawing, and more generally an everyday environment observed by the patient.
- By *"transmission"* of a lens it is meant the ratio between the light incident on a side of the lens and the light transmitted to the opposite side, either for a predefined light wavelength or overall. By overall transmission it is meant the average percentage of visible light transmitted through the filter, integrated over the whole visible spectrum.
- By *"visual stimulus"* it is meant the light signal generated by a scene and received by the eye of the patient.
- By *"visual perception"* it is meant the ability of a subject to perceive a visual stimulus *(e.g.,* to perceive color, shape, or movement of the visual stimulus) through the corresponding light stimulus that reaches the eye.

### BRIEF DESCRIPTION OF THE DRAWINGS

**Figure 1** is a schematic representation of the optical lens (1) according to the invention.
**Figure 2** is a graph showing exemplary absorbance spectra (absorbance 1 corresponds to 100% of light absorbance) of the human M cones (solid line) and L cones (dotted line), as a function of wavelength of light (in nm).
**Figure 3** is a graph showing the transmission spectra (in %) of a bandpass filter compliant with the present disclosure, as a function of wavelength of light (in nm).
**Figure 4** is a photograph of a text observed without **(****figure 4A****)** and with **(****figure 4B****)** a blurring filter 13 of the invention.
**Figure 5** is a graph showing the reading efficiency of a subject who is reading a text (total number of words accurately read on ordinate axis) without wearing any lens (none) and while wearing optical lenses 1 (center wavelength in nm of a bandpass filter 12).
**Figure 6** is a text adapted for letter crossing test.

### DETAILED DESCRIPTION

This invention relates to an optical lens 1 for augmented visual perception.

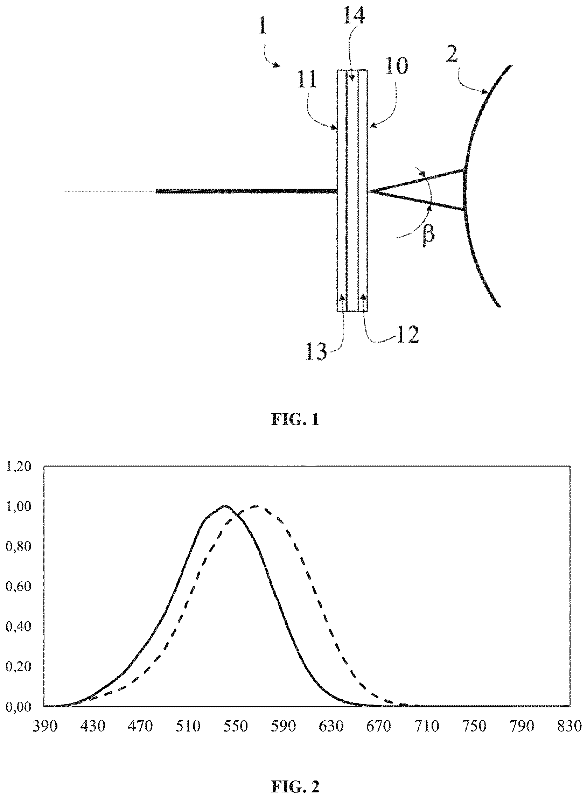

**Figure 1** is a schematic illustration of an optical lens 1 according to the present disclosure.

The optical lens 1 has a first side 10 configured to face an eye 2 of a subject, and a second side 11 opposite to the first side 10.

The optical lens 1 comprises a bandpass filter 12 and/or a blurring filter 13. Preferably, the optical lens 1 comprises both a bandpass filter 12 and blurring filter 13.

As will be later explained, each of these filters 12, 13 may be a film or layer. In this case, the optical lens 1 has a layered structure comprising a substrate 14, onto which said filters 12, 13 are laid.

For example, the bandpass filter 12 may be a thin colored film attached to the substrate 14. The blurring filter 13 may be a sheet, for instance a polystyrene sheet, attached to the substrate 14.

The substrate 14 may be a non-corrective optical lens *(e.g.,* an optical lens of a protective eyewear) or a corrective optical lens *(e.g.,* an ophthalmic lens made for the subject based on a prescription) or any material suitable to be placed in front of the eyes 2 of the subject.

### The bandpass filter

The bandpass filter 12 has a center wavelength comprised between 540 nm and 560 nm, preferably between 545 nm and 555 nm. Moreover, the bandpass filter 12 has a full width at half-height maximum (FWHM) equal or inferior to 50 nm.

More precisely, the center wavelength of the bandpass filter 12 is the wavelength corresponding to the maximum transmission of said filter. For a bandpass filter 12 having a transmission spectrum which is a symmetric curve (as in **figure 3****),** the center wavelength is also the wavelength at the center of said curve.

This bandpass filter 12 allows to block, or strongly attenuate, all the incident light wavelengths, except those belonging to the allowed band of the filter.

As a result, the light stimulus reaching the subject only comprises a small range of wavelengths corresponding to the wavelengths equally absorbed by the Medium wavelength-sensitive cones, also called M cones, and by the Long wavelength-sensitive cones, also called L cones, of the human retina.

A center wavelength selected in a small range around 550 nm ensures that the bandpass filter 12 is centered at a wavelength located at the intersection between the absorbance spectra of the M cones and of the L cones, *i.e.,* a wavelength equally absorbed by M cones and L cones.

Preferably, the center wavelength of the bandpass filter 12 is equal to 550 nm. This wavelength corresponds, in most subjects, to the wavelength of the intersection between the absorbance spectra of the M cones and of the L cones.

In some embodiments, the center wavelength may be in a range between 545 nm and 555 nm and different than 550 nm, for instance if the subject presents a corneal spectral-sensitivity, or M and L cones absorbance spectra, slightly different than average.

**Figure 2** is a graph illustrating typical absorption spectra of M cones (solid line) and L cones (dotted line).

As aforementioned, the light stimulus received by the cones of the retina is then converted into an electrical signal (phototransduction) adapted to be transmitted to the brain, via two main types of neurons: magnocellular neurons, or neurons of the magnocellular pathway, and parvocellular neurons, or neurons of the parvocellular pathway.

These pathways regulate the human vision by receiving the electrical signals from the cones and providing information on the basis of the different photon absorptions of these cones. The magnocellular pathway processes visual stimuli that are rapidly moving, seen for a very short amount of time, blurred and/or very faint, and the parvocellular pathway provides color vision and high spatial resolution.

More precisely, the neurons of the magnocellular pathway add the inputs received from the M cones and the inputs received from the L cones (M+L). The neurons of the parvocellular pathway subtract the inputs received from the M cones to the inputs received from the L cones and *vice versa* (M-L and L-M).

Therefore, the bandpass filter 12 of the lens 1 allows to increase the magnocellular/parvocellular stimulation ratio (MPR), *i.e.,* to facilitate the processing of visual stimuli through the magnocellular pathway. The MPR may be estimated as: $\frac{M + L}{\left|M-L\right|}$ wherein M is the level of activity elicited by a light stimulus in M cones *(i.e.,* the inputs received from the M cones), and L is the level of activity elicited by the light stimulus in L cones *(i.e.,* the inputs received from the L cones).

Of note, various techniques may be employed to measure the levels of activity elicited by a light stimulus in M and L cones, in order to calculate the MPR.

In several situations, it may be desirable to increase the MPR; for instance, whenever the magnocellular pathway is deactivated and/or the parvocellular pathway is overactivated; for instance, in subjects with sleep deprivation, with reading, spelling or handwriting difficulties, with dyslexia or alexia, or with learning or memory difficulties.

It may also be beneficial to increase the MPR when a fast response to moving or changing visual stimuli is required, such as during driving, or videogaming, or while watching a moving object.

The information from the magnocellular and parvocellular neurons is received and processed by the ventral stream and dorsal stream. The former receives information from both types of neurons, whereas the latter mainly receives information from magnocellular neurons.

Therefore, by increasing the MPR, the bandpass filter 12 further allows to support the functions of the dorsal stream, notably:
- the visual perception for visually guided behaviors such as catching a ball on the fly; driving...,
- the processing of movement,
- the processing of the spatial characteristics of objects (location, orientation).

The bandpass filter 12 preferably has a transmission at the center wavelength which is equal or inferior to 20%.

**Figure 3** is a graph showing an exemplary transmission spectrum of a bandpass filter 12 compliant with the present disclosure. In this example, the transmission at the center wavelength which is equal to 10%.

Moreover, the bandpass filter 12 preferably has an overall transmission which is equal or inferior to 10%. Preferably, the overall transmission is inferior to 4%.

Such low overall transmission allows to effectively reduce the luminance contrast between the scene (e.g., letters or figures) and the background.

### The blurring filter

The blurring filter 13 is configured to attenuate the spatial frequency of the visual stimulus corresponding to the scene which are greater than 10 cyc/deg. By *"attenuate"* it is meant that the intensity of the component of spatial frequency *f* is reduced by at least 5%, preferably at least 10%, ideally at least 50%. The component of spatial frequency *f* is typically the value obtained by Fourier transform of the visual stimulus. The cut-off frequency of the blurring filter 13 is the lowest spatial frequency for which attenuation is higher than 5%. In other words, the blurring filter 13 is a low pass filter.

In an embodiment, the blurring filter 13 is configured to attenuate the spatial frequency of the visual stimulus corresponding to the scene which are greater than 8 cyc/deg, preferably greater than 6 cyc/deg, more preferably greater than 4 cyc/deg. As edges of the scene correspond to high spatial frequency component of the visual stimulus, the cut-off frequency of the blurring filter 13 determines the amount of signal that will stimulate the parvocellular pathway: the lower the cut-off frequency, the lower the signal available for parvocellular pathway.

The blurring filter 13 may be a diffusive filter or a corrugated filter. For instance, a subject looking at a grid through a diffusive filter may not perceive precisely the limits of each wire of the grid: it corresponds to a blurring filter 13 with high cut-off frequency. Alternatively, a corrugated layer - though not diffusive, *i.e.,* purely refractive - may distort the visual stimulus so that neighboring wires appear superimposed, without altering the sharp perception of edges: it corresponds to a spatial bandpass filter. The blurring filter 13 may be any combination of these two structures: a diffusive filter and a corrugated filter.

Having this blurring filter 13 on the path of the light beam, interposed between the visual stimulus and the eye 2 of the subject, allows to spread out - by diffusion and/or refraction - the light beam traversing the lens 1.

The blurring filter 13 may be a layer or a film attached to one side 10, 11 of the lens 1, preferably, to the second side 11 **(****figure 1****).**

For example, the blurring filter 13 may be made of a solid diffusive material (for instance, a polystyrene sheet), or a solid material having a surface roughness (for instance, roughened quartz or polytetrafluoroethylene).

Preferably, the blurring filter 13 is detachable, *i.e.,* it is reversibly attached to the lens 1. Having a detachable blurring filter 13 allows to obtain a versatile lens 1 in which different diffusing power may be provided. In this case, the blurring filter 13 may be selected and changed depending on a task to be performed by the subject.

The blurring filter 13 allows to attenuate the high spatial frequencies of the light stimulus, comprising information about fine details of the visual stimulus.

As a result, the blurring filter 13 allows to softens the edges (which correspond to high spatial frequencies) of an object observed therethrough, while maintaining the coarser features (which correspond to lower spatial frequencies).

Overall, the blurring filter 13 allows to alter the visual perception of the subject of the visual stimulus, by providing a blurring effect to the light stimulus reaching the eye 2. An example of blurring effect is illustrated in **figure 4****.**

More precisely, **figure 4** is a schematic illustration of a text observed without **(****figure 4A****)** and with **(****figure 4B****)** the optical lens 1 comprising the bandpass filter 12 and the blurring filter 13.

Advantageously, the blurring filter 13 allows to further facilitate processing of visual information in the magnocellular pathway rather than in the parvocellular pathway, since the former processes blurred, faint stimuli and the latter sharp-edged, high contrast stimuli. Accordingly, an increase of the MPR is obtained.

Therefore, the optical lens 1 comprising both the bandpass filter 12 and the blurring filter 13 allows to significantly upregulate the magnocellular pathway and improve the visual perception, thanks to the combination of the wavelength filtering properties provided by the former and the blurring effect provided by the latter.

When the blurring filter 13 comprises a diffusive filter, it may be characterized as follows. A component of spatial frequency *f* of the visual stimulus will be attenuated if light arriving from two adjacent peaks are superimposed by diffusion. For instance, two peaks separated by 0.1° in the visual stimulus - corresponding to a spatial frequency*f*=10 - will be superimposed if the light ray coming from one peak is scattered over an angle sufficiently large. Assuming a distance between lens and eye of 1 cm, the scattering angle should be larger than 5°. Therefore, the blurring filter 13 may be defined with a diffusion power, which is the percentage of light transmitted by the blurring filter 13 outside a predefined dispersion angle β, for a normal angle of incidence *(i.e.,* for a light perpendicular to the surface of the blurring filter 13, see **figure** 1). The diffusing power is thus expressed as %:β.

For example, in a perfectly non-diffusive material, all the incident light *(i.e.,* 100%) propagates through the material without changing its direction *(i.e.,* it is not scattered). In this case, the diffusing power is 0%:0°.

The blurring filter 13 may have a diffusing power equal or smaller than 20%:16°, *i.e.,* the blurring filter 13 transmits 20% or less of the incident light outside a dispersion angle β of 16° (which correspond to more than 80% of the light being transmitted inside said angle β).

In some examples, the blurring filter 13 has a diffusing power equal or smaller than 20%:10°.

Preferably, the diffusing power of the blurring filter 13 is greater than 5%:3°, more preferably 10%:5°.

The lower is the diffusing power, the lower is the blurring effect provided by the blurring filter.

Advantageously, a diffusing power comprised between 20%:16° and 10%:5°is high enough to provide a blurring of the light stimulus, but small enough to ensure that the visual stimulus is perceived correctly by the subject (e.g., for a visual stimulus consisting in a text, the diffusing power is small enough to ensure that the blurred letters and numbers are recognizable and can be read by the subject).

In a preferred embodiment, the blurring filter 13 is a frost filter such as diffusion filters supplied by LEE Filters (a Panavision Company).

When the blurring filter 13 comprises a corrugated filter, the same reasoning applies, except that angle β to consider is not a scattering angle, but a refraction angle γ. Therefore, the blurring filter 13 may be defined with a refractive power, which is the percentage of light transmitted by the blurring filter 13 with a deviation angle equal to or larger than γ, for a normal angle of incidence *(i.e.,* for a light perpendicular to the surface of the blurring filter 13). The refractive power is thus expressed as %: γ.

For example, in a perfectly planar lens, all the incident light *(i.e., 100%)* propagates through the material without changing its direction *(i.e.,* it is not refracted). In this case, the refractive power is 0%:0°.

The blurring filter 13 may have a refractive power equal or smaller than 20%:16°, *i.e.,* the blurring filter 13 refracts 20% or more of the incident light with a refracted angle γ of 16° or more (which correspond to less than 80% of the light being transmitted with low refraction).

In some examples, the blurring filter 13 has a refractive power equal or smaller than 20%:10°. Preferably, the refractive power of the blurring filter 13 is greater than 5%:3°, more preferably 10%:5°.

As both diffusive power and refractive power are expressed under the same form and define an amount of light deviated, the blurring filter may be characterized with a deviating power, this power being the sum of the diffusive power and the refractive power. The blurring filter 13 may have a deviating power equal or smaller than 20%:16°, *i.e.,* the blurring filter 13 refracts 20% or more of the incident light with a deviated angle γ of 16° or more (which correspond to less than 80% of the light being transmitted with low refraction or diffusion).

In some examples, the blurring filter 13 has a deviating power equal or smaller than 20%:10°. Preferably, the deviating power of the blurring filter 13 is greater than 5%:3°, more preferably 10%:5°.

The combination of the bandpass filter and the blurring filter advantageously lowers contrast and high spatial frequencies of the scene observed through said optical lens and inhibits the parvocellular stream of the subject wearing said optical lens.

### Ophthalmic lenses and spectacles

The invention also relates to spectacles comprising a frame and a pair of optical lenses 1 as described hereinabove.

For instance, the bandpass filter 12 and the blurring filter 13 may be cut and shaped, from a thin film or layer, to conform to the substrate of the optical lenses 1 of the spectacles.

In this case, the thickness of the bandpass filter 12 and the blurring filter 13 is preferably of about 0,1 mm or less.

### Materials

The optical lens 1 may be made of any material suitable to be placed facing the eye 2 of the subject (e.g., glass or plastic).

As aforementioned, the optical lens 1 may have a layered structure, for instance a three-layer structure comprising the substrate 14, the bandpass filter 12 and the blurring filter 13.

In this case, the substrate 14, the bandpass filter 12 and the blurring filter 13 may be laid such that the light stimulus, before reaching the eye 2, passes through:
- the bandpass filter 12, then the substrate 14, then the blurring filter 13;
- the blurring filter 13, then the substrate 14, then the bandpass filter 12;
- the bandpass filter 12, then the blurring filter 13, then the substrate 14;
- the blurring filter 13, then the bandpass filter 12, then the substrate 14;
- the substrate 14, then the blurring filter 13, then the bandpass filter 12; or
- the substrate 14, then the bandpass filter 12, then the blurring filter 13.

Preferably, when the optical lens 1 has a three-layer structure, the substrate 14 is in the middle, the blurring filter 13 is laid onto the second side 11, and the bandpass filter 12 is laid onto the first side 10, as schematically shown in **figure 1****.**

In some examples, the optical lens may have a one-layer or two-layer structure.

For instance, the substrate 14 of the optical lens 1 may be a tinted lens incorporating appropriate dyes which have the wavelength filtering properties of the bandpass filter 12 previously described.

In this case, the function of the bandpass filter 12 is provided by the substrate material 14.

In addition, the substrate 14 of the optical lens 1 may present a rough surface (preferably, provided on the second side 11).

In this case, the function of the blurring filter 13 is provided by the substrate material 14 and, more precisely, by the rough surface.

### Methods for selecting optimal lenses

The invention also relates to a method for selecting an optical lens 1 for improving visual perception of a subject.

The method may comprise a first measuring step during which one or more optical parameters of the subject are measured.

Then, at least one optical lens 1 is provide to the subject, who places the optical lens 1 at a predetermined distance from a scene (for instance, at a distance of 60 cm) and from the eyes (for instance, at a distance of 1 cm).

During a measuring step, the optical parameter of the subject is measured while the subject is wearing the optical lens 1.

Preferably, this measuring step may comprise several phases. During a first phase, different optical lenses 1 are successively provided to the subject. The bandpass filters 12 of these optical lenses 1 have different features. The measurement of the optical parameter is repeated for each optical lens 1, and the optical lens 1 of the plurality corresponding to the best optical parameter is selected. The features of the bandpass filters 12 may be selected from the list of: center wavelengths, FWHM, maximum transmission, overall transmission, or a combination thereof.

During a second phase, different blurring filters 13 having different features are successively coupled to the selected optical lens 1. The measurement of the optical parameter is repeated while each of the blurring filter 13 is provided on the selected lens 1, and the blurring filter 13 corresponding to the best optical parameter is selected. The features of the blurring filter 13 may be selected from the list of: cut-off frequency, attenuation level, shape of the cut-off - first order, second order or higher -or a combination thereof.

In the method, at least two optical lenses 1 having different filtering features of the bandpass filter 12 and/or different features of the blurring filter 13 are provided to the subject and lead to a measurement of an optical parameter of the subject, so as to select the optical lens corresponding to the best measured optical parameter. Preferably, the setup of measurement - type of scene, eye/lens and scene/lens distances, illumination - is kept unchanged with all optical lenses 1 tested.

The method described hereinabove advantageously allows to identify the optimal optical lens 1 for improving the visual perception of a subject with a typical visual system.

Preferably, for a subject with a typical visual system, the optical parameter is a perception threshold.

For instance, a visual motion direction perception threshold of the subject may be measured during a first estimating step. This measurement may be performed for instance via a four forced-choice random-dot kinematogram and an adaptive staircase procedure.

In addition, a visual motion speed perception threshold of the subject may be measured during said first measuring step. This may be performed for instance via a motion speed discrimination task and an adaptive staircase procedure.

The method described hereinabove further allows to identify the optimal optical lens 1 for improving the visual perception of a subject having an impairment of the magnocellular visual pathway; preferably, a subject with dyslexia.

In this case, the optical parameter is preferably a parameter related to reading efficiency, for instance an inverse efficiency index.

This optical parameter may be measured via any known reading test *(e.g.,* by providing lists of pseudo-words composed of orientation-sensitive letters that the subject must read out-loud). The inverse efficiency index may be calculated by dividing the reading time by the percentage of errors.

The reading test may comprise linear arrangements of symbols, numbers and/or letters. Preferably, the reading test comprises pseudo-words. Tests comprising pseudo-words are particularly adapted for assessing the reading efficiency of people having dyslexia.

### Methods for improving visual perception

The invention also relates to a method for improving visual perception.

In particular, the method allows to improve the perception of a moving or transient visual stimulus.

The method comprises interposing the optical lens 1 (or spectacles comprising said optical lens 1) disclosed hereabove between the eye 2 of a subject and a visual stimulus.

In an embodiment, the optical lens 1 comprises a bandpass filter 12 having a center wavelength comprised between 540 nm and 560 nm and having a full width at half maximum equal or inferior to 50 nm.

In another embodiment, the optical lens 1 comprises a blurring filter (13) configured to attenuate the spatial frequency of the visual stimulus corresponding to the scene which are greater than 10 cyc/deg.

In another embodiment, the optical lens 1 comprises
- a bandpass filter 12 having a center wavelength comprised between 540 nm and 560 nm and having a full width at half maximum equal or inferior to 50 nm; and
- a blurring filter (13) configured to attenuate the spatial frequency of the visual stimulus corresponding to the scene which are greater than 10 cyc/deg.

For instance, the visual stimulus may be a moving object or a transient stimulus observed by a steady or moving subject.

The interposition of the lens 1 fosters a processing of the light stimulus through the magnocellular pathway, *i.e.,* increase the MPR thanks to the combination of the bandpass filter 12 and the blurring filter 13.

### Methods for treating an impairment

Last, the invention also relates to a method for treating an impairment of the magnocellular and/or parvocellular visual pathway of a subject. The method comprises interposing the optical lens or the spectacles disclosed hereabove between the eye of the subject and a scene. Then, the magnocellular stream will be more solicited, leading finally to reduction of impairment.

In an embodiment, the optical lens 1 comprises a bandpass filter 12 having a center wavelength comprised between 540 nm and 560 nm and having a full width at half maximum equal or inferior to 50 nm.

In another embodiment, the optical lens 1 comprises a blurring filter (13) configured to attenuate the spatial frequency of the visual stimulus corresponding to the scene which are greater than 10 cyc/deg.

In another embodiment, the optical lens 1 comprises
- a bandpass filter 12 having a center wavelength comprised between 540 nm and 560 nm and having a full width at half maximum equal or inferior to 50 nm; and
- a blurring filter (13) configured to attenuate the spatial frequency of the visual stimulus corresponding to the scene which are greater than 10 cyc/deg.

Preferably, this method is used for subject suffering from dyslexia.

### EXAMPLE

The present invention is further illustrated by the following examples.

### Example 1: reading test

In this experiment, a participant having dyslexia suffering from a severe difficulty to read pseudo-words composed of orientation-sensitive letters *(e.g.,* p, b, d, q) was exposed to lists of pseudo-words comprising orientation-sensitive letters (e.g., "padaba") and asked to read as many of them as possible in 1 minute. The number of pseudo-words accurately read by the subject in one minute was counted. The reading efficiency was calculated as the total number of words accurately read.

The experiment was repeated while the subject was not wearing any lens and while the subject was wearing different optical lenses comprising a bandpass filter having a center wavelength and a FWHM of 50 nm. The optical lenses differed in that each comprised a bandpass filter having a different center wavelength. The tested center wavelengths were: 440 nm, 445 nm, 450 nm, 500 nm, 520 nm, 550 nm, 570 nm, 600 nm, 630 nm, 650 nm, 670 nm.

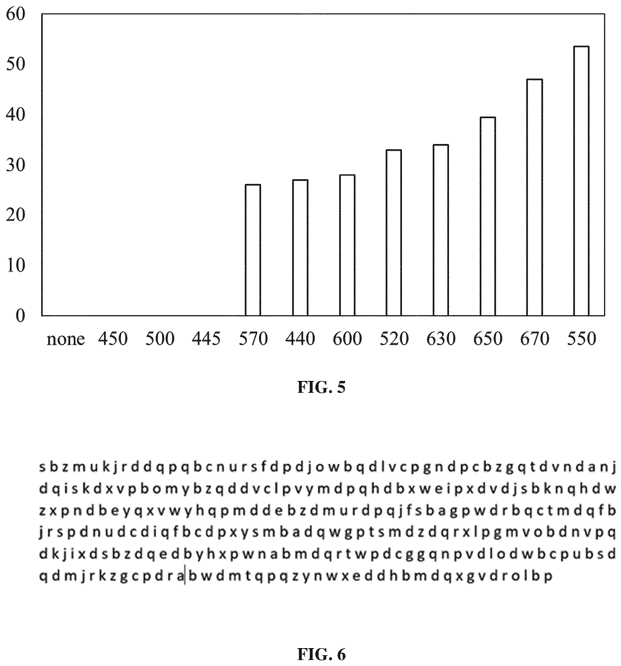

The results obtained are shown in **figure 5****.** More precisely, **figure 5** is a graph showing the reading efficiency per minute (vertical axis) as a function of the center wavelength of the bandpass filter (horizontal axis) by a person with severe dyslexia without any filter and with 11 different filters of varying properties. The numbers on the axis refer to the center wavelength of the bandpass filter (in nm). The leftmost category on the horizontal axis (noted "none") corresponds to the subject reading without any lens.

These results show that the best reading efficiency is obtained with the optical lenses 1 comprising a bandpass filter 12 having a center wavelength equal to 550 nm.

Addition of a blurring filter (2016 White diffusion from LEE Filters) led the subject to increase his reading performance.

### Example 2: letter crossing

In this experiment, a participant having dyslexia has to find - and cross out - as many times as possible the letter "d" hidden among other letters on a sheet of paper - a listing - in 30 seconds, as illustrated in **figure 6****.** The other letters will be either mirror letters (b, q), or phonologically close letters (g), or other letters. Each listing includes 48 times the target letter "d", 24 times the mirror letter "b", 24 times the mirror letter "q", 24 other "high" letters (f, h, k, l, t), 24 times the "bass" (j, g, y), 24 vowels, 24 letters phonologically close to "d" (m, n) and 72 other letters (w, x, c, s, r, v, z), in random order. The letters are written in black ink in Calibri size 13, arranged in 6 lines with a single space between them and printed on a white A4 page. During the test, the white sheet is back-illuminated by a projector so that the luminance of the white is about 100 cd/m².

The test is repeated 40 times (sequences of letters organized differently): 20 times with participant wearing optical lenses comprising a bandpass filter having a center wavelength and a FWHM of 50 nm and a center wavelength of 550 nm - the Filter - and 20 times with participant wearing another filter - the Reference A - reducing the contrast to the same extent as the Filter, with different spectral features. The participant is given a score for each repetition of the exercise equivalent to the difference between the number of "d" crossed out and the number of other letters crossed out, *i.e.,* the number of errors. Repeating the exercise 20 times provides reasonable statistical power (75%) to observe a statistically significant effect of the Filter - Student's t test for paired samples - if its effect is a moderate effect - Cohen's test with value d of 0.5 - and a very high statistical power (96%) to observe a statistically significant effect of the Filter if its effect is larger - Cohen's test with value d of 0.8. As the conditions with Filter and with Reference A are proposed in mixed order, an effect of the Filter will not be confused with an effect of order.

A second test session of 40 repetition is performed, with the same Filter and another filter reducing the contrast - the Reference B. Contrast reduction of both Reference A and Reference B is the same, but achieved by different means.

The participant's performance in letter crossing test is improved when he/she is wearing the Filter.

Addition of a blurring filter (2016 White diffusion from LEE Filters) led the subject to increase his letter crossing performance.

### Example 3: lexical decision

In this experiment, a participant sees displayed on a screen either a word that exists (*e.g*., "baleine" - whale in english) or a word that does not exist (a pseudo-word) constructed by transforming a letter of a word that exists into a "mirror" letter *(e.g.,* "daleine") or in a phonologically close letter (e.g., "galeine"). Participant has to decide as quickly as possible whether the sequence of letters displayed on the screen is a word that exists or not (by pressing a button). The letters are displayed in Calibri 10, in black ink, in the center of the screen, on a white background. The experiment includes a total of 100 existing words, 100 pseudo-words composed of a mirror letter and 100 pseudo-words composed of a phonologically similar letter. These stimuli are divided into 4 groups (1, 2, 3 and 4) of 25 words, 25 "mirror" pseudo-words and 25 "phonological" pseudo-words. All stimuli are presented to the participant wearing optical lenses comprising a bandpass filter having a center wavelength and a FWHM of 50 nm and a center wavelength of 550 nm (A) - the Filter - and without the optical lenses (B) in the following order: A1, B2, A3, B4, B1, A2, B3, A4 so that a possible effect of the Filter is not confused with an order effect. For each participant, the mean response times under the filtered and unfiltered conditions are compared in an analysis of variance with order as the covariate.

A second test session is performed, with the same Filter and another filter reducing the contrast by the same magnitude as the Filter - the Reference. Contrast reduction of both Filter and Reference is the same, but achieved by different means.

The participant's performance in lexical decision test is improved when he/she is wearing the Filter.

Addition of a blurring filter (2016 White diffusion from LEE Filters) led the subject to increase his lexical decision performance.

### Example 4: cognitive effort

In this experiment, a participant performs different reading tasks (reading words, sentences) wearing optical lenses comprising a bandpass filter having a center wavelength and a FWHM of 50 nm and a center wavelength of 550 nm - the Filter - and without the optical lenses. During the test, the diameter of the participant's pupil is measured using an eye-tracker (EyeLink 1000 from SR Research Ltd.). Pupil dilation is correlated with cognitive effort.

The participant's cognitive effort is lowered during reading when he/she is wearing the Filter

Addition of a blurring filter (2016 White diffusion from LEE Filters) led the subject to lower his cognitive effort while reading.

## Claims

1. Optical lens (1) for augmented visual perception of a scene, said optical lens having a first side (10) configured to face an eye (2) of a subject, and a second side (11) opposite to the first side (10), the optical lens (1) comprising:
• a bandpass filter (12) having a center wavelength comprised between 540 nm and 560 nm and having a full width at half maximum equal or inferior to 50 nm; and
• a blurring filter (13) configured to attenuate the spatial frequencies of the visual stimulus corresponding to the scene which are greater than 10 cyc/deg.

2. The optical lens (1) of claim **1,** wherein the center wavelength of the bandpass filter (12) is comprised between 545 nm and 555 nm, preferably equal to 550 nm.

3. The optical lens (1) of any one of claims **1** to **2,** wherein the bandpass filter (12) has an overall transmission equal or inferior to 10%, preferably inferior to 4%.

4. The optical lens (1) of any one of claims **1** to **3,** wherein the blurring filter (13) is configured to attenuate the spatial frequencies of the visual stimulus corresponding to the scene which are greater than 8 cyc/deg, preferably greater than 6 cyc/deg, more preferably greater than 4 cyc/deg.

5. The optical lens (1) according to any one of claims **1** to **4,** wherein the bandpass filter (12) is laid onto to the first side (10) of the optical lens (1) and the blurring filter (13) is laid onto to the second side (11) of the optical lens (1).

6. The optical lens (1) according to any one of claims **1** to **5,** wherein the blurring filter (13) is made of a solid diffusive material, or a solid material having a surface roughness, preferably roughened quartz or polytetrafluoroethylene.

7. The optical lens (1) according to any one of claims **1** to **6,** wherein the optical lens (1) is an ophthalmic lens, preferably a spectacle lens.

8. Spectacles comprising a frame and a pair of spectacle lenses according to claim **7.**

9. Method for selection of optical lenses for improving visual perception of a scene by a subject, the method comprising:
a. providing the optical lens (1) according to any one of claims **1** to **7** or the spectacles according to claim **8** to the subject, the optical lens (1) or spectacles being interposed at a predetermined distance from the eyes (2) of the subject and from the scene;
b. measuring an optical parameter of the subject, the optical parameter being selected from the list of: reading efficiency, inverse efficiency index, visual motion direction perception threshold, visual motion speed perception threshold,
wherein said providing and measuring are repeated for at least two optical lenses (1) or spectacles having different filtering features of the bandpass filter (12) and/or different features of the blurring filter (13); and
c. among the provided optical lenses (1) or spectacles, selecting the optical lens (1) or spectacles corresponding to the best measured optical parameter.

10. The method of claim **9,** wherein the scene comprises a linear arrangement of symbols, numbers and/or letters.

## Patentansprüche

1. Optische Linse (1) zur erweiterten visuellen Wahrnehmung einer Szene, wobei die optische Linse eine erste Seite (10), die so konfiguriert ist, dass sie einem Auge (2) eines Probanden zugewandt ist, und eine zweite Seite (11) gegenüber der ersten Seite (10) aufweist, wobei die optische Linse (1) umfasst:
• einen Bandpassfilter (12) mit einer Mittelwellenlänge zwischen 540 nm und 560 nm und mit einer Halbwertsbreite von kleiner gleich 50 nm; und
• einen Unschärfefilter (13), der so konfiguriert ist, dass er die der Szene entsprechenden räumlichen Frequenzen des visuellen Stimulus abschwächt, die größer als 10 Zyklen/Grad sind.

2. Optische Linse (1) nach Anspruch **1**, wobei die Mittelwellenlänge des Bandpassfilters (12) zwischen 545 nm und 555 nm liegt und vorzugsweise gleich 550 nm beträgt.

3. Optische Linse (1) nach einem der Ansprüche **1** bis **2**, wobei der Bandpassfilter (12) eine Gesamttransmission von kleiner gleich 10 %, vorzugsweise von weniger als 4 %, aufweist.

4. Optische Linse (1) nach einem der Ansprüche **1** bis **3**, wobei der Unschärfefilter (13) so konfiguriert ist, dass er die der Szene entsprechenden räumlichen Frequenzen des visuellen Stimulus abschwächt, die größer als 8 Zyklen/Grad, vorzugsweise größer als 6 Zyklen/Grad, vorzugsweise größer als 4 Zyklen/Grad, sind.

5. Optische Linse (1) nach einem der Ansprüche **1** bis **4**, wobei der Bandpassfilter (12) auf die erste Seite (10) der optischen Linse (1) aufgebracht ist und der Unschärfefilter (13) auf die zweite Seite (11) der optischen Linse (1) aufgebracht ist.

6. Optische Linse (1) nach einem der Ansprüche **1** bis **5**, wobei der Unschärfefilter (13) aus einem festen, diffusiven Material oder einem festen Material mit einer Oberflächenrauheit, vorzugsweise aus aufgerautem Quarz oder Polytetrafluorethylen, besteht.

7. Optische Linse (1) nach einem der Ansprüche **1** bis **6**, wobei die optische Linse (1) eine Augenlinse, vorzugsweise ein Brillenglas, ist.

8. Brille, umfassend eine Fassung und ein Paar Brillengläser nach Anspruch **7**.

9. Verfahren zum Auswählen optischer Linsen zum Verbessern der visuellen Wahrnehmung einer Szene
durch einen Probanden, wobei das Verfahren umfasst:
a. Bereitstellen der optischen Linse (1) nach einem der Ansprüche **1** bis **7** oder der Brille nach Anspruch **8** für den Probanden, wobei die optische Linse (1) oder die Brille in einem vorbestimmten Abstand von den Augen (2) des Probanden und von der Szene eingefügt ist;
b. Messen eines optischen Parameters des Probanden, wobei der optische Parameter aus der folgenden Liste ausgewählt wird: Leseeffizienz, inverser Effizienzindex, Wahrnehmungsschwellenwert der visuellen Bewegungsrichtung, Wahrnehmungsschwellenwert der visuellen Bewegungsgeschwindigkeit,
wobei das Bereitstellen und Messen für mindestens zwei optische Linsen (1) oder Brillen mit unterschiedlichen Filtermerkmalen des Bandpassfilters (12) und/oder unterschiedlichen Merkmalen des Unschärfefilters (13) wiederholt wird; und
c. unter den bereitgestellten optischen Linsen (1) oder Brillen, Auswählen der optischen Linse (1) oder Brille, die dem am besten gemessenen optischen Parameter entspricht.

10. Verfahren nach Anspruch **9**, wobei die Szene eine lineare Anordnung von Symbolen, Zahlen und/oder Buchstaben umfasst.

## Revendications

1. Lentille optique (1) pour la perception visuelle augmentée d'une scène, ladite lentille optique ayant un premier côté (10) configuré pour faire face à un œil (2) d'un sujet, et un deuxième côté (11) opposé au premier côté (10), la lentille optique (1) comprenant :
• un filtre passe-bande (12) ayant une longueur d'onde centrale comprise entre 540 nm et 560 nm et ayant une largeur à mi-hauteur inférieure ou égale à 50 nm ; et
• un filtre de flou (13) configuré pour atténuer les fréquences spatiales du stimulus visuel correspondant à la scène qui sont supérieures à 10 cyc/deg.

2. Lentille optique (1) selon la revendication 1, dans laquelle la longueur d'onde centrale du filtre passe-bande (12) est comprise entre 545 nm et 555 nm, de préférence égale à 550 nm.

3. Lentille optique (1) selon l'une quelconque des revendications 1 à 2, dans laquelle le filtre passe-bande (12) a une transmission globale inférieure ou égale à 10 %, de préférence inférieure à 4 %.

4. Lentille optique (1) selon l'une quelconque des revendications 1 à 3, dans laquelle le filtre de flou (13) est configuré pour atténuer les fréquences spatiales du stimulus visuel correspondant à la scène qui sont supérieures à 8 cyc/deg, de préférence supérieures à 6 cyc/deg, plus préférentiellement supérieures à 4 cyc/deg.

5. Lentille optique (1) selon l'une quelconque des revendications 1 à 4, dans laquelle le filtre passe-bande (12) est appliqué sur le premier côté (10) de la lentille optique (1) et le filtre de flou (13) est appliqué sur le deuxième côté (11) de la lentille optique (1).

6. Lentille optique (1) selon l'une quelconque des revendications 1 à 5, dans laquelle le filtre de flou (13) est fabriqué à partir d'un matériau diffusant solide, ou d'un matériau solide ayant une rugosité de surface, de préférence du quartz dépoli ou du polytétrafluoroéthylène.

7. Lentille optique (1) selon l'une quelconque des revendications 1 à 6, dans laquelle la lentille optique (1) est une lentille ophtalmique, de préférence un verre de lunettes.

8. Lunettes comprenant une monture et une paire de verres de lunettes selon la revendication 7.

9. Procédé de sélection de lentilles optiques pour améliorer la perception visuelle d'une scène par un sujet, le procédé comprenant :
a. fournir au sujet la lentille optique (1) selon l'une quelconque des revendications 1 à 7 ou les lunettes selon la revendication 8, la lentille optique (1) ou les lunettes étant interposées à une distance prédéterminée des yeux (2) du sujet et de la scène ;
b. mesurer un paramètre optique du sujet, le paramètre optique étant choisi dans la liste constituée de : efficacité de lecture, indice d'efficacité inverse, seuil de perception de la direction du mouvement visuel, seuil de perception de la vitesse du mouvement visuel,
dans lequel ladite fourniture et ladite mesure sont répétées pour au moins deux lentilles optiques (1) ou lunettes ayant des caractéristiques de filtrage différentes du filtre passe-bande (12) et/ou des caractéristiques différentes du filtre de flou (13) ; et
c. parmi les lentilles optiques (1) ou lunettes fournies, sélectionner la lentille optique (1) ou les lunettes correspondant au meilleur paramètre optique mesuré.

10. Procédé selon la revendication 9, dans lequel la scène comprend une disposition linéaire de symboles, de chiffres et/ou de lettres.
